# FASCICULE DE BREVET EUROPEEN

(11) **EP 0 790 904 B1**
(45) Date de publication et mention de la délivrance du brevet: **24.05.2000**
(21) Numéro de dépôt: 96930229.8
(22) Date de dépôt: 09.09.1996
(51) Int. Cl.: B60R 16/02

(54) **CONTACTEUR TOURNANT A RUBAN COURT, NOTAMMENT POUR VEHICULES AUTOMOBILES**
KURZTBANDDREHSCHALTER FÜR KRAFTFAHRZEUGE
ROTARY CONTACTOR WITH A SHORT STRIP, IN PARTICULAR FOR MOTOR VEHICLES

(30) Priorité: 07.09.1995 FR 9510691
(43) Date de publication de la demande: 27.08.1997
(73) Titulaire: VALEO ELECTRONIQUE, 94042 Creteil Cédex (FR)
(72) Inventeur: LAGIER, Daniel, F-92000 Nanterre (FR)
(74) Mandataire: Gamonal, Didier
(86) Numéro de dépôt international: FR9601376
(87) Numéro de publication internationale: WO9709202

(56) Documents cités:
- EP-A- 0 478 455
- WO-A-95/02263
- DE-A- 3 908 179
- GB-A- 2 282 014
- US-A- 5 171 153

## Description

La présente invention concerne les contacteurs tournants, notamment pour véhicules automobiles, du genre comportant deux parties coaxiales montées mobiles en rotation l'une par rapport à l'autre à l'encontre d'un ruban souple de liaison électrique enroulé en spirale entre lesdites parties, en étant attelé à l'une de ses extrémités à l'une desdites parties et à l'autre de ses extrémités à l'autre desdites parties.

Un tel contacteur est décrit par exemple dans le document EP-A-0 479 567.

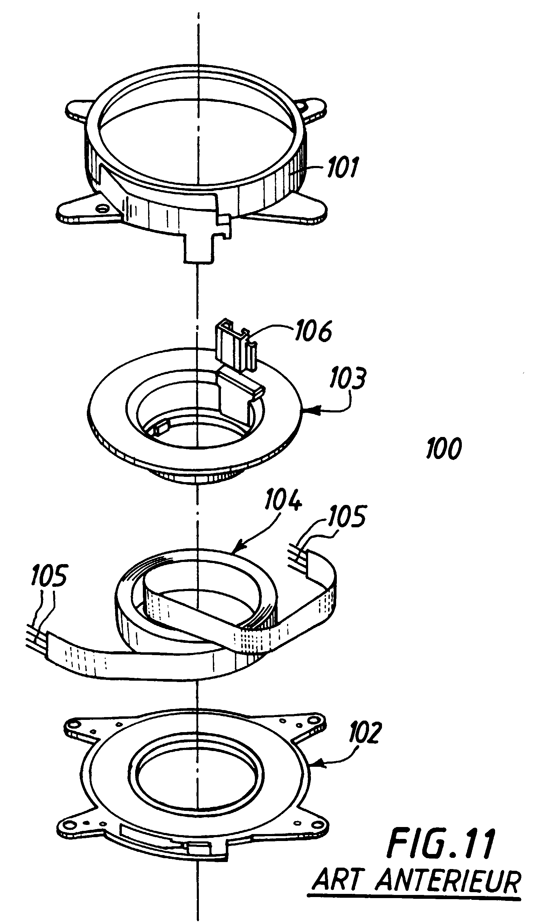

Ainsi à la figure 11 on voit en 100 un éclaté du contacteur tournant comportant une partie fixe 101,102 en forme de boîtier fixé à la colonne de direction du véhicule automobile, via le support de commutateur placé sous le volant et fixé à l'extrémité de la colonne de direction.

Ce contacteur comporte une partie mobile 103 en forme de moyeu monté tourillonnant sur la plaque de base 102 du boîtier 101,102. Ce moyeu comporte une cheminée 106 propre à être entraînée en rotation par le volant du véhicule et formant également connecteur.

En pratique le moyeu 103 est monté à l'intérieur du boîtier creux formé par les pièces 101,102.

L'une des extrémités du ruban souple 104 est attelée à ladite cheminée 106, tandis que l'autre extrémité du ruban souple 104 est attelée à la plaque de base 102 de la partie fixe.

Ainsi qu'on le sait, le ruban souple 104 comporte un ou plusieurs conducteurs électriques 105 et un isolant pour isoler les conducteurs 105 entre eux.

Ce ruban 104 permet une liaison électrique entre les deux parties 101,102-103 sans microcoupure.

Grâce au contacteur tournant 100 on assure des liaisons électriques pour, par exemple, commander un coussin gonflable de protection du conducteur ou l'avertisseur sonore à partir du volant. Tout cela dépend des applications.

Avec ce type de contacteur, il se pose un problème car l'on doit pouvoir effectuer par exemple 2,5 tours de volant dans un sens et 2,5 tours de volant dans l'autre sens.

Ainsi ce ruban s'enroule en spirale sur le moyeu et se déroule sur le boîtier à la manière d'un ressort de montre. Il doit être de grande longueur pour satisfaire à la rotation de l'ordre de 5 tours nécessaire sur la plupart des véhicules automobiles, cette rotation étant limitée par des butées ou par la traction du ruban.

La longueur du ruban est donc variable en fonction des diamètres d'enroulement interne et de déroulement extérieur déterminés par l'encombrement du contacteur.

D'une manière générale, la longueur de ces rubans est de l'ordre de 3 à 6 mètres et entre dans le coût du contacteur tournant pour une part importante, notamment en fonction du nombre de voies ou de conducteurs 105, que présente ledit ruban 104. Plus de la moitié du prix peut être dû dans certains cas au ruban.

Il est également souhaitable de réduire l'encombrement radial d'un tel contacteur implanté sous le volant dans un emplacement voisin de nombreux appareils électriques tels que des commutateurs.

En pratique le diamètre intérieur du moyeu 103 est fonction du diamètre de l'arbre de direction traversant la colonne de direction fixe du véhicule.

Ainsi le diamètre intérieur du contacteur tournant à une valeur imposée.

Pour démultiplier le nombre de tours entre le moyeu et le boîtier et réduire la longueur du ruban, on a déjà proposé dans les documents US-A-5,171,573 et EP-A-0 478 455 de doter le contacteur tournant d'un train d'engrenages épicycloïdaux avec au moins un pignon propre à engrener avec une denture intérieure du boîtier et avec une denture extérieure du moyeu.

En pratique ces pignons sont prolongés pour porter des galets ou des paliers pour guider le ruban souple. Par exemple dans le document EP-A-0 478 455 le ruban souple forme une boucle en U engagée sur les paliers.

Le ruban est ainsi de manière discontinue au contact des galets et ou des paliers en sorte qu'il est sollicité au détriment de la durée de vie du contacteur.

En outre cela est de nature à augmenter la hauteur du contacteur et cela complique la réalisation du pignon.

La présente invention a donc pour objet de créer de manière simple et économique un contacteur tournant d'encombrement radial et en hauteur réduite, avec un ruban court s'enroulant dans de bonnes conditions, tout en simplifiant le pignon du train d'engrenages épicycloïdaux.

Suivant l'invention un contacteur du type sus-indiqué est caractérisé en ce que le pignon est porté à rotation par un rotor intérieur de forme annulaire creuse doté d'une jupe annulaire d'orientation axiale, en ce que le rotor intérieur est monté à rotation sur le moyeu mobile en étant logé à l'intérieur du boîtier fixe, en ce qu'un espace existe entre le moyeu mobile et l'alésage interne de la jupe du rotor intérieur pour logement du ruban et enroulement de celui-ci autour du moyeu mobile et en ce que la jupe du rotor intérieur présente des moyens de passage pour le ruban souple propre à s'enrouler sur la jupe.

Grâce à l'invention, de manière simple et économique, on peut réduire l'encombrement total du contacteur tournant en prenant pour base le diamètre intérieur du moyeu défini par les cahiers des charges du constructeur, le nombre de tours de volant à réaliser, tout en assurant une continuité électrique sans microcoupure de contact grâce au ruban de liaison électrique de faible longueur s'enroulant dans de bonnes conditions sur le moyeu et le rotor intérieur.

En effet grâce à l'invention et plus particulièrement au train d'engrenages épicycloïdaux on peut réduire de manière conséquente la longueur du ruban utilisé grâce à l'effet de démultiplication du nombre de tours entre la partie fixe (le boîtier) et la partie mobile (le moyeu) et ainsi diminuer le prix de revient du contacteur en minorant le coût des pièces et les temps d'assemblage, le boîtier et le moyeu ayant une forme simple.

On diminue également les bruits dus à la longueur du ruban, tout en favorisant le montage du contacteur. Le ruban s'enroule de manière circulaire sur le moyeu et le rotor intérieur. Il est donc bien soutenu et ménagé au bénéfice de la durée de vie du contacteur. Le pignon est simplifié.

Suivant une autre caractéristique de l'invention le contacteur tournant comporte, à l'intérieur du boîtier fixe, également un rotor extérieur avec un système d'entraînement en rotation débrayable entre les deux rotors, en sorte que le train d'engrenages épicycloidaux est à double différentiel.

Cette disposition permet de réduire encore la longueur du ruban souple.

D'autres caractéristiques et avantages de l'invention apparaîtront à la lumière de la description qui va suivre en regard des dessins annexés dans lesquels :
- la figure 1 est une vue en éclaté du contacteur tournant sans son ruban souple ;
- la figure 2 est une vue analogue à la figure 1 mais vu dans l'autre sens axial ;
- la figure 3 est une vue schématique du contacteur tournant montrant celui-ci dans l'une de ses positions extrêmes de butée, avec le ruban déroulé ;
- la figure 4 est une vue analogue à la figure 3 montrant le contacteur tournant en position totalement enroulé pour l'autre de ses positions extrêmes ;
- la figure 5 est une vue analogue à la figure 3 montrant le contacteur tournant en position moyenne (roue droite) ;
- la figure 6 est une vue partielle du contacteur sans le moyeu pour sa position correspondant à celle de la figure 5 ;
- la figure 7 est une vue partielle analogue à la figure 6 pour la position du contacteur correspondant à celle de la figure 3 ;
- la figure 8 est une vue analogue à la figure 6 pour la position du contacteur correspondant à celle de la figure 4 ;
- la figure 9 est une vue schématique montrant les diverses positions du doigt d'entraînement pour respectivement les positions extrêmes de butée et la position moyenne ;
- la figure 10 est une vue en perspective du ruban ;
- la figure 11 est une vue schématique éclatée d'un contacteur selon l'art antérieur.

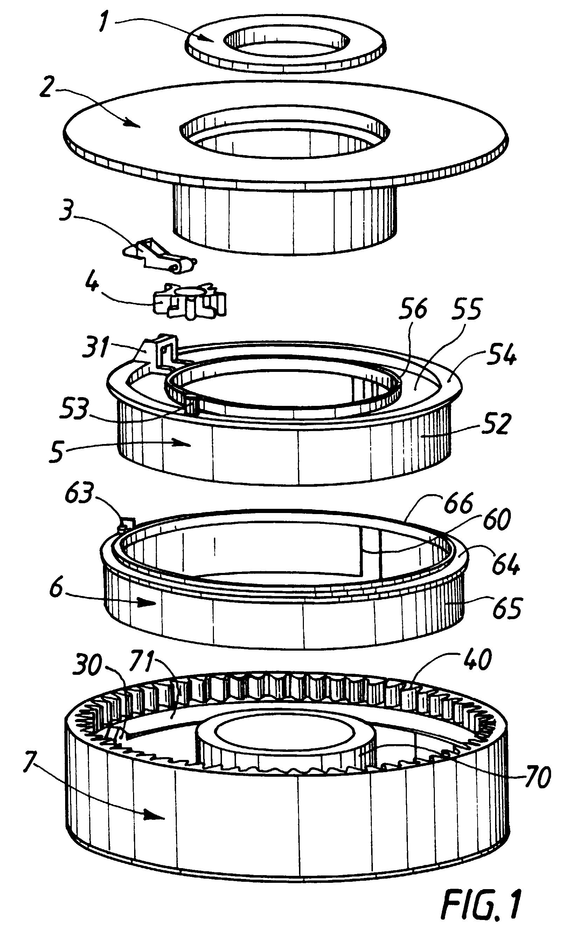

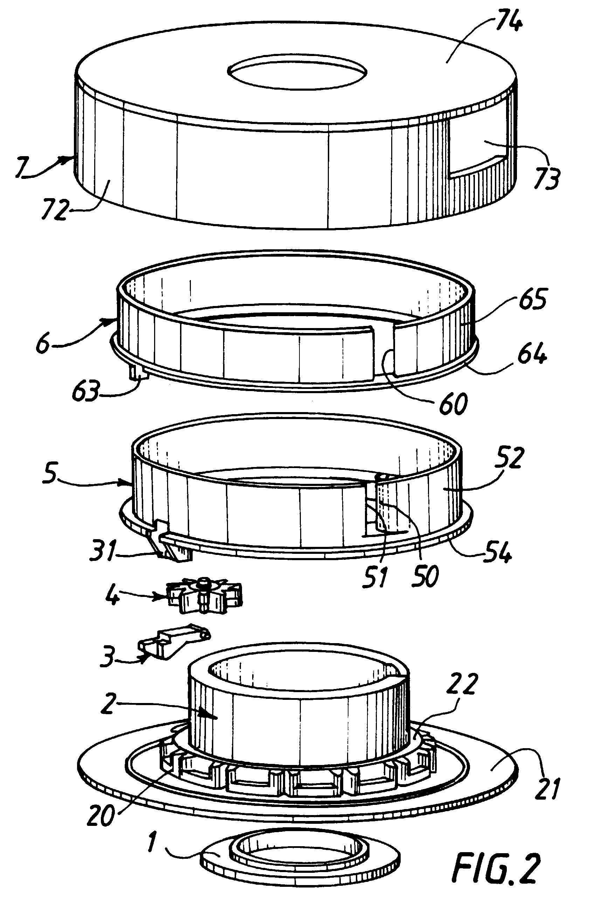

Dans les figures 1 à 9 est représenté un contacteur tournant pour véhicule automobile du genre comportant deux parties coaxiales 2,7 montées mobiles en rotation l'une par rapport à l'autre à l'encontre d'un ruban souple 8 de liaison électrique, enroulé en spirale entre lesdites parties en étant attelé à l'une de ses extrémités à l'une desdites parties et à l'autre des extrémités à l'autre desdites parties.

Ici l'une des parties comporte un moyeu 2, mobile en rotation, propre à être lié en rotation au volant du véhicule et un boîtier fixe 7 solidaire de la colonne de direction fixe du véhicule via le support de commutateur placé sous le volant et non visible. Le moyeu 2 est logé à l'intérieur du boîtier 7 de forme creuse.

Dans le but de réduire la longueur du ruban souple 8 et de réduire l'encombrement externe du boîtier 7, suivant une caractéristique de l'invention, le contacteur tournant comporte un rotor intérieur 5 de forme annulaire et creuse monté à rotation sur le moyeu 2 en étant logé dans le boîtier 7 et un train d'engrenages épicycloidaux 40,20,4 porté par le boîtier fixe 7, le moyeu mobile 2 et le rotor intérieur 5 pour entraîner à rotation le rotor intérieur 5 par le moyeu 2 et démultiplier le nombre de tours entre le moyeu mobile 2 et le boîtier fixe 7.

Le rotor intérieur présente des moyens de passage 51 pour le ruban souple 8. Ces moyens 51 consistent ici en une fente décrite ci-après. En variante ils peuvent consister en une fenêtre.

Plus précisément dans ces figures le contacteur tournant comporte un ensemble de pièces en matière plastique à savoir une bague 1, le moyeu mobile 2, un doigt 3, un pignon 4, le rotor intérieur 5, un rotor extérieur 6 et le boîtier 7. Les rotors 5,6 sont de forme annulaire creuse, tout comme le boîtier 7 de forme simple.

Ces pièces sont avantageusement obtenues par moulage. Le boîtier 7 est ici monobloc contrairement à celui de la figure 11 et comporte un fond 74 d'orientation transversale relié à sa périphérie externe à une jupe annulaire d'orientation axiale 72. Ce fond 74 est troué centralement à sa périphérie interne et présente en saillie axiale une cheminée centrale 70 en forme de manchon tubulaire.

Intérieurement la jupe 72 comporte une denture intérieure 40 ménagée dans son alésage interne, une paroi lisse d'orientation transversale 71 s'érigeant en saillie radialement vers l'axe de l'ensemble à partir de la denture 40 et portant une rampe 30 saillante axialement. L'alésage interne de la jupe 72 est donc étagé avec une partie cylindrique raccordée à la denture 40, de diamètre interne supérieur et de faible hauteur, par la paroi 71. La denture 40, à dents à développante de cercle, et la rampe 30, de forme triangulaire (pointue).à sommet arrondi, sont ménagées à l'extrémité libre du boîtier 7, c'est-à-dire dans la partie supérieure de celui-ci.

Ce boîtier, de forme simple obtenue par moulage, comporte également une ouverture latérale 73 de forme sensiblement rectangulaire pour permettre la sortie du ruban souple de liaison électrique et la liaison à la connectique intégrée. Ici une cheminée (non représentée par simplicité) s'étend radialement vers l'extérieur à partir de l'ouverture 73.

Le boîtier fixe 7 est donc de forme annulaire creuse et ici on n'a pas représenté, par simplicité, les oreilles de fixation du boîtier 7 au support de commutateur placé sous le volant du véhicule et lié à l'extrémité de la colonne de direction. En variante ce boîtier 7 peut être réalisé directement dans la partie centrale dudit support de commutateur, ce qui permet une réduction du nombre des pièces.

A l'intérieur de ce boîtier 7, sont logés les deux rotors 5,6, de forme annulaire et creuse, autour desquels s'enroule ou se déroule le ruban souple électriquement conducteur 8 comportant, enrobé dans un isolant électrique, un nombre de voies ou conducteurs électriques, tels que des fils conducteurs aplatis, déterminés en fonction des applications et du nombre d'informations à faire transiter entre la colonne de direction fixe et le volant mobile en rotation. Ce ruban détermine en partie l'épaisseur du contacteur tournant.

Les extrémités du ruban conducteur 8 sont solidaires respectivement d'une partie 80 du boîtier 7 et d'une partie 81 du moyeu mobile 2, mû en rotation par le volant du véhicule. Le moyeu 2 est monté tourillonnant sur le boîtier 7 à la faveur de la cheminée centrale 70 de celui-ci. Plus précisément le moyeu 2 est engagé par sa périphérie interne sur la périphérie externe de la cheminée 70. Ce moyeu 2 comporte à l'une de ses extrémités, à son extrémité supérieure, un flasque 21 d'orientation transversale adapté à fermer le boîtier 7.

On notera que l'on n'a pas représenté ici la cheminée d'entraînement (saillante radialement) du moyeu 2 pour liaison en rotation de ce moyeu 2 avec le volant du véhicule. Pour plus de précision on se reportera à la figure 11. Ici les cheminées du boîtier 7 et du moyeu 2 sont adjacentes aux parties 80,81.

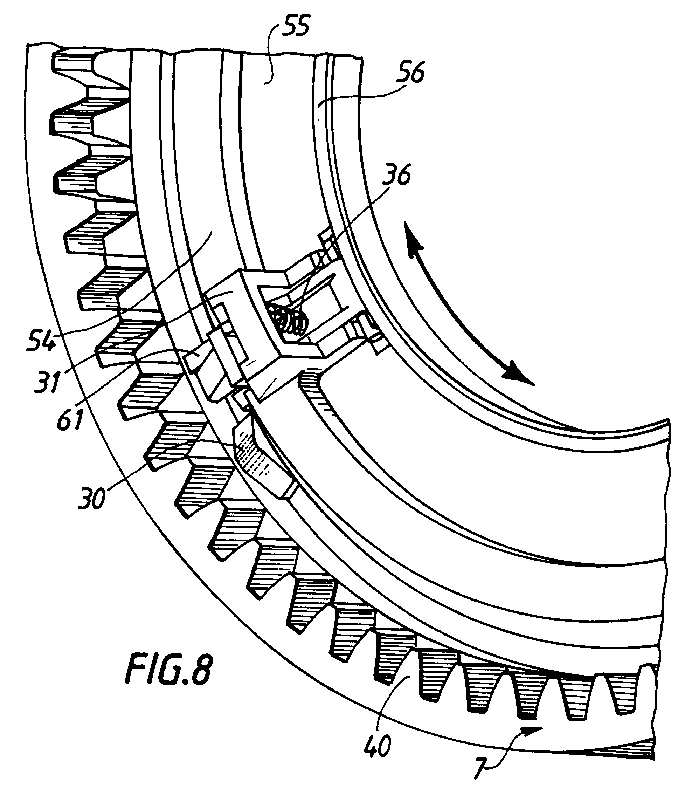

Le rotor intérieur 5 est centré et pivote autour du moyeu 2. Ce rotor 5 est globalement en forme d'anneau et comporte une jupe périphérique annulaire, d'orientation axiale 52, raccordée à l'une de ses extrémités (son extrémité supérieure - figure 1) à un flasque transversal 54. Ce flasque 54 porte d'un seul tenant en saillie axiale dans sa partie supérieure, du côté opposé à sa jupe 52, un pivot 53, ici en forme de pion, destiné à recevoir le pignon 4 ainsi qu'un pontet 31 permettant le maintien et l'articulation d'un doigt 3 soumis à l'action d'un ressort de rappel 36 (figure 8).

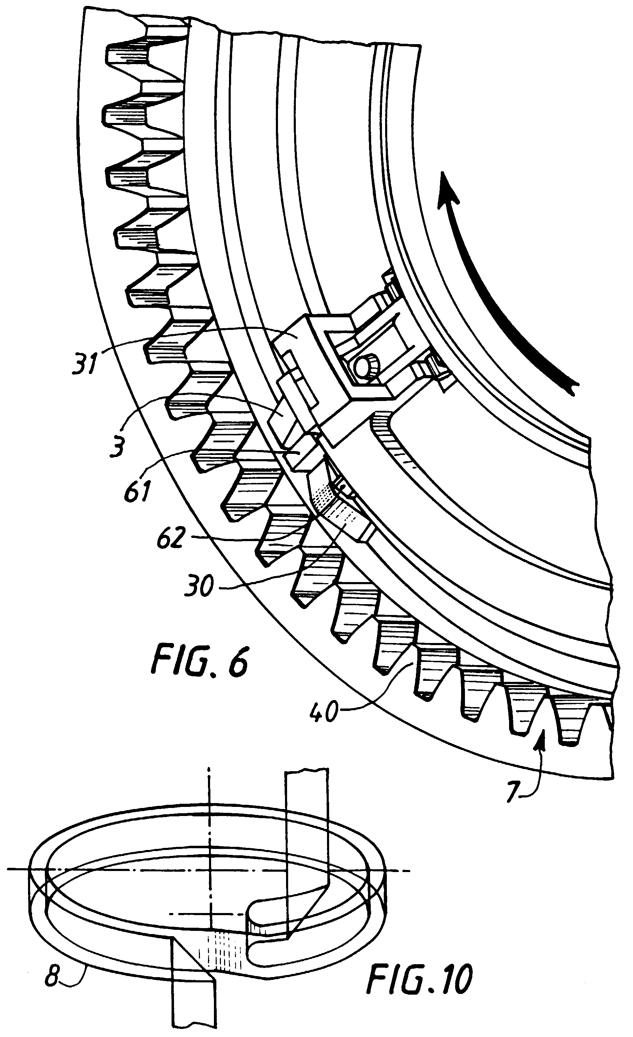

Pour ce faire le pontet 31 comporte (figures 6 à 8) des berceaux pour recevoir des tourillons 32, que présente le doigt 3 à son extrémité axiale la plus proche du moyeu 2. L'autre extrémité de ce doigt 3 est en forme de coin. Ce doigt présente un téton en regard d'un autre téton porté par le pontet 31 pour montage à centrage du ressort de rappel 36, ici sous forme d'un ressort à boudin, entre les deux tétons. Ainsi ce ressort à boudin s'appuie sur le pont du pontet 31 à l'une de ses extrémités et sur le doigt 3 à l'autre de ses extrémités pour maintenir ledit doigt 3 constamment en position basse, c'est-à-dire en contact avec le fond d'une échancrure pratiquée dans la jupe 52 et interrompant le flasque 54 au niveau du pontet 31.

En pratique le flasque 54 forme en surépaisseur une nervure annulaire à la périphérie externe d'un fond 55 troué d'orientation transversale (figure 1), que présente le rotor 5 dans sa partie supérieure. A sa périphérie interne ce fond 55 présente axialement en surépaisseur d'un seul tenant un manchon 56 de centrage. Le pontet 31 présente deux jambages reliant le flasque 54 au manchon 56 de diamètre interne inférieur à celui de la jupe 52. C'est dans ces jambages que sont formés les berceaux de réception des tourillons 32.

Au niveau du flasque 54, le pontet 31 s'étend axialement en surélévation en ayant globalement en section une forme de U avec deux branches d'orientation axiale ancrées dans le flasque et une base reliant entre elle les deux branches et formant le pont précité servant à l'appui du ressort 36. Les branches du U permettent un bon maintien du doigt 3.

On notera que c'est le manchon 56 qui permet un montage rotatif du rotor intérieur 5 sur le moyeu 2, en sorte qu'un espace suivant une caractéristique de l'invention existe entre le moyeu et l'alésage interne de la jupe 52 pour logement du ruban et enroulement de celui-ci autour du moyeu 2. Ce ruban est donc protégé par le rotor 5.

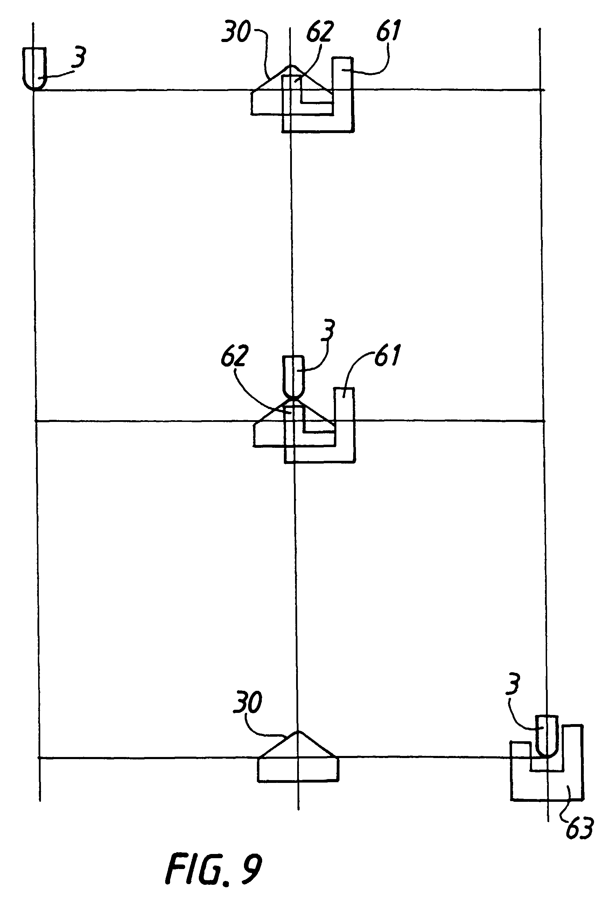

On notera que l'extrémité en forme de coin du doigt 3 est reliée par deux ailes latérales à la partie principale du doigt 3 portant latéralement les tourillons d'articulation 32. Ces ailes permettent de guider le ressort 36. L'extrémité en forme de coin du doigt 3 présente une face interne arrondie (figure 9), pour coopérer avec la rampe 30 et est décalée axialement par rapport à la partie principale du doigt 3.

La jupe 52 est fendue en 51 pour passage du ruban 8, la profondeur de la fente 51, ici borgne, étant fonction de la hauteur du ruban 8. Cette fente permet un passage aisé du ruban 8.

L'un des pans délimitant la fente 51 est arrondi en 50 pour permettre le retournement du ruban 8 sans blesser celui-ci de manière décrite ci-après. L'arrondi s'étend entre la jupe 52 et le moyeu 2.

Le rotor extérieur 6 est également en forme d'anneau et comporte donc une jupe annulaire 65 raccordée à sa partie supérieure (figure 1) à un flasque transversal 64 portant extérieurement en saillie axiale deux pions 61,62 de hauteur inégale appartenant à une fourchette 63. Ici le pion 62 est de hauteur moindre que le pion 61, lesdits pions 61,62 étant décalés circonférentiellement l'un par rapport à l'autre.

On notera que le moyeu 2 présente également en saillie à sa périphérie externe une denture 20, dite denture extérieure, ici partielle au niveau de son flasque 21. La denture 20 est formée à la faveur d'une surépaisseur 22 que présente le moyeu 2 à sa périphérie externe au niveau de son flasque 21. La surépaisseur 22 définit un épaulement transversal de butée pour le manchon 56 du rotor intérieur 5. La denture 20 n'est pas circulairement continue, contrairement à la denture 40, qui elle-même est continue c'est-à-dire complète. Bien entendu la denture 20 peut être circulairement continue cela dépendant des applications.

Bien entendu la jupe 65 est dotée également d'un moyen de passage 60, ici une fente, pour le ruban souple 8, le rotor extérieur 6 entourant le rotor intérieur 5.

Ainsi le train d'engrenages épicycloïdaux comporte ici les dentures 40,20 et le pignon 4 monté rotatif sur le pion 53 de forme cylindrique et formant ainsi un tourillon solidaire du rotor intérieur 5.

Bien entendu on peut prévoir si besoin est d'autres pignons par exemple répartis à 120° les uns par rapport aux autres.

Le pignon 4 est donc monté rotatif sur le tourillon 53 et entraîne à rotation le rotor intérieur 5 pas à pas en coopération avec la denture partielle menante 20 du moyeu 2 et la denture complète fixe 40 du boîtier 7.

La conjugaison des trois éléments 40,20,4 forme un train d'engrenages épicycloïdaux ayant un rapport multiplicateur dans la proportion de la somme des diamètres du moyeu et du rotor intérieur monté sur le moyeu.

Soit d1 le diamètre externe du moyeu et d2 le diamètre externe du rotor intérieur, il en résulte que le rapport de réduction est égal à (d1 + d2) / d1.

Ainsi qu'on l'aura compris, le nombre de dents de la denture 20 du moyeu (réalisé dans la partie supérieure du moyeu 2) est défini pour obtenir le rapport multiplicateur adapté aux dimensions du contacteur tournant, en sorte que la denture 20 peut être ou non continue.

Le doigt d'entraînement saillant 3 du rotor intérieur 5 est adapté à coopérer avec la rampe 30 à double pente précitée ou came située à l'intérieur du boîtier 7 dans la partie supérieure de celui-ci, tout comme la denture 40, engrenant de manière complémentaire avec la denture du pignon 4.

Bien entendu le diamètre externe du flasque 54 est tel qu'il n'interfère pas avec les doigts 61,62 de la fourchette 63, qui est donc implantée radialement entre le flasque 54 et la rampe 30. Il ressort également que le rotor extérieur 6 comporte intérieurement, en surépaisseur axialement par rapport à son flasque 64, d'un seul tenant un manchon de centrage 66 et ce à la périphérie interne du flasque 64.

Le manchon 66 a un alésage interne de diamètre inférieur à celui de la jupe 65. Le manchon 66 permet donc un montage rotatif du rotor extérieur 6 sur le rotor intérieur 5 (sur la jupe 52 de celui-ci) tout en ménageant un espace entre les rotors 5,6 pour logement du ruban souple 8. Bien entendu un espace existe également entre l'alésage interne du boîtier 7 et le rotor extérieur 6 pour permettre l'enroulement du ruban 8 sur le rotor 6, qui soutient ainsi bien le ruban 8.

Le ruban 8 est ici un câble extrudé multiconducteurs, sa souplesse lui permet de subir le retournement nécessaire au principe de fonctionnement du contacteur tournant. Ses deux extrémités sont pliées à 90°, pour permettre la sortie directe vers la connectique (les connecteurs) évitant ainsi toute liaison intermédiaire (figure 10).

Les zones pliées à 90° sont surmoulées sur les parties 80 et 81 précitées du boîtier 7 et du moyeu 2 pour garantir la géométrie requise et assurer également le positionnement et le maintien dans la cheminée 70 du moyeu 2 et dans le boîtier 7.

Avantageusement l'isolant électrique du ruban 8 est en matériau globalement insonore à faible coefficient de frottement. Il est à base par exemple de polyamide 11 ou de copolymère d'éthylène et de tétrafluoréthylène stable pour des températures comprises entre -55° et 150°. Les conducteurs électriques du ruban sont avantageusement des fils aplatis.

La bague 1 précitée permet l'assemblage final du contacteur tournant par son clipsage sur la cheminée 70 du boîtier 7. La bague 1 assure donc le maintien et permet la rotation des pièces constitutives du contacteur.

Ainsi ici le ruban souple 8 est attelé par surmoulage respectivement au moyeu 2 et au boîtier 7 et une liaison en rotation débrayable est réalisée entre les rotors 5,6 grâce au doigt 3 et au pion 61,62 de manière décrite ci-après.

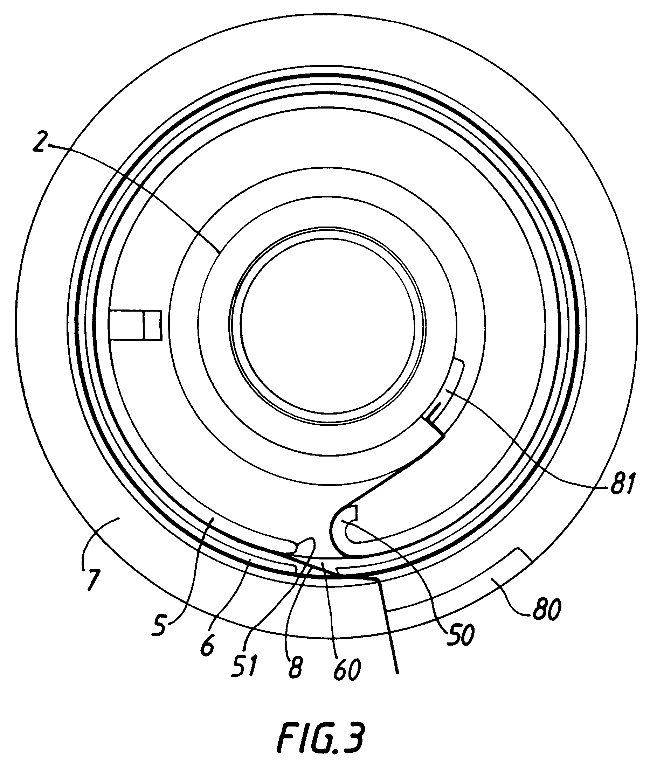

En considérant comme point de départ en rotation l'une des positions extrêmes montrées dans les figures 3 et 6 et position à gauche de la figure 9, le moyeu central 2 est entraîné en rotation par le volant du véhicule et tire sur le ruban. La denture 20 du moyeu 2 entraîne en rotation le pignon 4 porté par le rotor intérieur 5. Ce pignon prend appui sur la denture similaire fixe 40, placée à l'intérieur du boîtier 7 dans la partie supérieure de celui-ci, entraînant ainsi en rotation le rotor intérieur 5. Durant cette phase, le rotor extérieur est fixe.

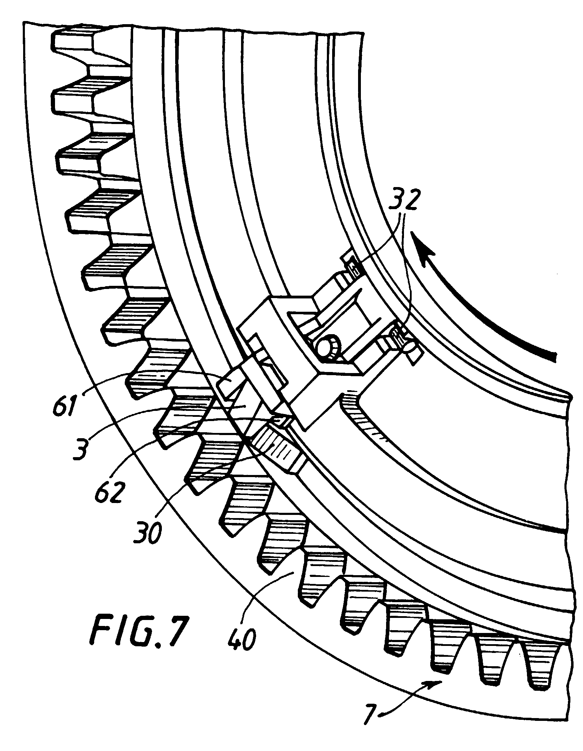

Lorsque le rotor intérieur a effectué une rotation de un tour, le doigt d'entraînement 3, placé sur le flasque 54 dudit rotor 5 en étant entraîné par celui-ci, rencontre la rampe fixe 30 à double pente (figure 7 et position moyenne de la figure 9), placée sur la partie lisse 71 dudit boîtier 7, ce qui permet par la suite au doigt de monter, à l'encontre du ressort 36, au-dessus du premier pion 62 porté par le rotor extérieur 6 et de venir ensuite (figure 8) buter sur le second pion 61 de hauteur plus importante que le premier pion 62 pour entraîner en rotation le rotor extérieur 6. Ainsi entraîné, le rotor extérieur réalise une rotation de un tour.

Bien entendu la distance entre les pions 61,62 est fonction de l'épaisseur du doigt 3 (partie gauche de la figure 9), afin que ledit doigt 3 puisse se loger entre les deux pions 61,62.

A l'issue des deux tours du rotor intérieur 5 et de un tour du rotor extérieur 6, le moyeu 2 a réalisé une rotation égale ou supérieure à 5 tours.

Le nombre de tours du moyeu 2 est donc déterminé par son diamètre extérieur et ensuite par celui des deux rotors 5,6.

Ce dimensionnement permet de déterminer le rapport de multiplication du train d'engrenages épicycloïdaux 40,20,4 à adopter pour obtenir un dimensionnement correct du produit.

Ainsi qu'on l'aura compris le train d'engrenages épicycloïdaux 40,20,4 est à double différentiel du fait de la présence des pions 61,62 et du doigt 3 maintenu par le pontet 31.

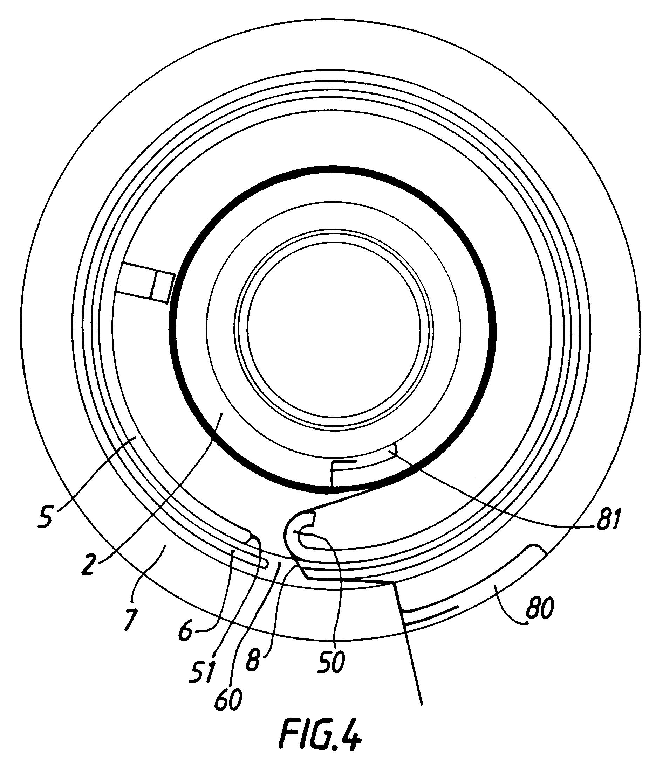

Pour l'autre position extrême (figure 4 et position gauche de la figure 9) le sens de rotation du moyeu 2 est inversé. La totalité du ruban 8 étant enroulé sur le moyeu 2.

Le doigt d'entraînement porté par le rotor intérieur 5 est positionné par les deux pions 61,62 de la fourchette 63 du rotor extérieur 6 (figures 8 et 9). Il y a donc liaison en rotation des deux rotors 5,6.

La rotation du moyeu 2 entraîne la rotation du train d'engrenages épicycloïdaux 40,20,4, qui lui-même fait tourner le rotor intérieur 5 qui entraîne en rotation le rotor extérieur 6.

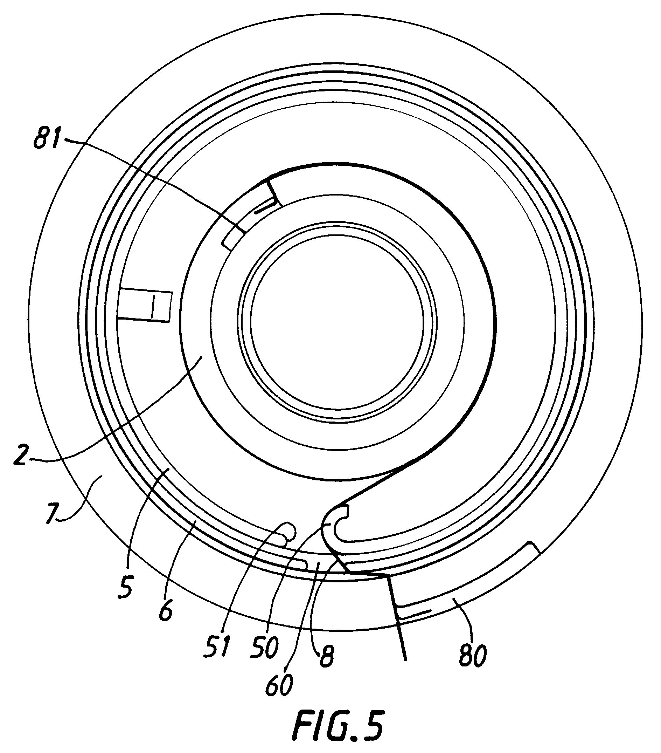

A l'issue d'un premier tour (figure 5) le doigt d'entraînement 3 est levé par la rampe 30, de forme pointue, du boîtier 7 permettant ainsi une désolidarisation en rotation des rotors 5,6.

Par la suite, seul le rotor intérieur 5 est alors entraîné en rotation sur un tour, pour retrouver sa position d'origine (figure 3). Ainsi dans la position d'origine (figures 3 et 10) le ruban 8 est tendu jusqu'à la fente 51, puis il est retourné à la faveur de l'arrondi 50 avant de s'enrouler sur globalement un tour sur la jupe 52. Un deuxième tour est réalisé sur la jupe 65 du rotor extérieur 6, le ruban étant passé au préalable dans la fente 60.

A la figure 4, le ruban 8 est enroulé sur le moyeu 2 et passe sur l'arrondi 50 pour traverser les fentes 51,60 en correspondance l'une avec l'autre. A la figure 5 le ruban est enroulé sur le moyeu 2 et sur le rotor extérieur, il traverse les fentes 51,60.

Ainsi grâce à l'invention le dispositif multiplicateur de tours basé sur le principe d'un double différentiel permet de réaliser un gain de longueur de ruban dans un rapport compris entre 6 et 10, le rapport 10 correspondant à une solution dans laquelle le diamètre du moyeu 2 est important et le rapport 6 a une solution dans laquelle le diamètre du moyeu 2 est faible.

On appréciera que tout ceci est réalisé sans microcoupure grâce au ruban 8 dont l'isolant présente avantageusement un faible coefficient de frottement.

On appréciera que la solution est moins bruyante que celle de l'art antérieur car le ruban est plus court et que les rotors creux sont des pièces simples avec une jupe pour l'enroulement du ruban et un manchon de centrage, d'orientation axiale, à l'intérieur de la jupe pour montage rotatif du rotor sur respectivement le moyeu et le rotor intérieur et dégager de l'espace pour le ruban. La longueur des manchons 56,66 dépend des applications. Ici les manchons 56,66 sont courts et consistent en des collerettes et avantageusement l'extrémité de la cheminée 70, voisine du fond 74 du boîtier 7, est étagée et présente des parties de centrage cylindriques sur lesquelles s'emmanchent respectivement l'extrémité libre de la jupe 52 et de la jupe 65.

Ainsi les rotors 5 et 6 sont montés rotatifs à chacune de leur extrémité libre sur la cheminée étagée 70 et à leur autre extrémité, grâce aux collerettes 56,66, respectivement sur le moyeu 2 et sur le rotor intérieur 5.

Bien entendu la présence du rotor extérieur dépend des applications, un seul rotor pouvant être prévu.

On appréciera, malgré l'épaisseur du rotor intérieur 5, que le diamètre extérieur du contacteur peut être réduit du fait que le ruban est plus court, sachant que celui-ci est monté avec des jeux dans le boîtier 7 à la manière d'un ressort de montre.

Une meilleure réduction d'encombrement externe est obtenue avec les deux rotors car la présence du deuxième rotor, malgré son épaisseur, permet de raccourcir le ruban et de gagner encore en encombrement.

Un dispositif de transmission de mouvement à double différentiel, entre le boîtier 7 et le moyeu 2, est obtenu grâce aux deux rotors, au train épicycloïdal, et à la liaison à rotation de manière débrayable entre lesdits rotors en sorte que le train d'engrenages épicycloidaux est à double différentiel.

On appréciera que le ruban 8 est ménagé car il s'enroule sur le moyeu 2 et les jupes des rotors 5,6. Il est donc bien soutenu, son enroulement s'effectuant de manière circulaire. Le boîtier 7 est de faible hauteur.

## Revendications

1. Contacteur tournant, notamment pour véhicules automobiles, du genre comportant deux parties coaxiales montées mobiles en rotation l'une par rapport à l'autre, à l'encontre d'un ruban souple de liaison électrique (8) enroulé en spirale entre lesdites parties (2,7) en étant attelé à l'une de ses extrémités à l'une desdites parties et à l'autre de ses extrémités à l'autre desdites parties, dans lequel l'une desdites parties (2,7) comporte un moyeu (2) mobile en rotation et l'autre partie un boîtier fixe de forme creuse (7) à l'intérieur duquel se loge le moyeu (2), et dans lequel le boîtier fixe (7) comporte une jupe annulaire d'orientation axiale à l'intérieur de laquelle est ménagée une denture intérieur (40) appartenant à un train d'engrenages épicycloïdaux (40,4,20) comportant également une denture ménagée en saillie à la périphérie externe du moyeu (2) et au moins un pignon (4) propre à engrener avec la denture intérieure (40) du boîtier fixe (7) et avec la denture (20) du moyeu (2), ledit train permettant de démultiplier le nombre de tours entre le moyeu mobile (2) et le boîtier fixe (7), caractérisé en ce que le pignon (4) est porté à rotation par un rotor intérieur (50) de forme annulaire creuse, doté d'une jupe annulaire (52) d'orientation axiale, en ce que le rotor intérieur (5) est monté à rotation sur le moyeu mobile (2) en étant logé à l'intérieur du boîtier fixe (7), en ce qu'un espace existe entre le moyeu mobile (2) et l'alésage interne de la jupe (52) du rotor intérieur (5) pour logement du ruban et enroulement de celui-ci autour du moyeu mobile (2) et en ce que la jupe (52) du rotor intérieur (5) présente des moyens de passage (51) pour le ruban souple (8) propre à s'enrouler sur la jupe (52) du rotor intérieur (5).

2. Contacteur selon la revendication 1, caractérisé en ce que le rotor intérieur (5) porte un pion (53) pour montage à rotation du pignon (4), et en ce que la denture (40) du boîtier (7) est continue, tandis que la denture (20) du moyeu (2) est partielle.

3. Contacteur selon la revendication 1, caractérisé en ce que les moyens de passage (51) consistent en une fente (51) pratiquée dans la jupe (52) du rotor intérieur (5) et en ce que l'un des pans de la fente présente un arrondi (50) pour retournement dudit ruban (8).

4. Contacteur selon la revendication 1, caractérisé en ce que le rotor intérieur (5) présente à l'une de ses extrémités un fond (55) transversal et un manchon (56) pour centrage et montage rotatif du rotor intérieur (5) sur le moyeu (2).

5. Contacteur selon la revendication 1, caractérisé en ce qu'il comporte à l'intérieur du boîtier fixe (2) un rotor extérieur (6), de forme annulaire creuse, entourant le rotor intérieur (5) et des moyens de liaison en rotation (3,61,62) intervenant de manière débrayable entre le rotor intérieur (5) et le rotor extérieur (6), en sorte que ledit train épicycloïdal est à double différentiel.

6. Contacteur selon la revendication 5, caractérisé en ce que le rotor intérieur (5) porte un doigt d'entraînement (3) propre à coopérer avec des pions (61 et 62) portés par le rotor extérieur (6).

7. Contacteur selon la revendication 6, caractérisé en ce que les pions (61,62) du rotor extérieur (6) ont une hauteur différente.

8. Contacteur selon la revendication 6, caractérisé en ce que le doigt d'entraînement (3) est propre à coopérer avec des moyens de rampe (30) portés intérieurement par le boîtier (7).

9. Contacteur selon la revendication 6, caractérisé en ce que le doigt d'entraînement (3) est monté basculant sur le rotor intérieur (5) à l'aide d'un pontet (31), que présente ledit rotor intérieur (5).

10. Contacteur selon la revendication 9, caractérisé en ce que le doigt d'entraînement (3) présente à l'une de ses extrémités deux tourillons latéraux (32) pour montage dans des berceaux solidaires du pontet (31).

11. Contacteur selon la revendication 9, caractérisé en ce que le doigt d'entraînement (3) est soumis à l'action d'un ressort de rappel (36) prenant appui sur un pont du pontet (31) et sur la partie supérieure du doigt d'entraînement (3).

12. Contacteur selon la revendication 11, caractérisé en ce que le doigt d'entraînement (3) présente à l'autre de ses extrémités une forme de coin pour coopérer avec une rampe de forme pointue (30) portée intérieurement par le boîtier (7).

13. Contacteur selon la revendication 5, caractérisé en ce que le rotor extérieur (6) présente une jupe de forme annulaire (65) fendue pour passage du ruban souple (8), ladite fente (60) étant pratiquée dans une jupe (52) annulaire, que présente le rotor extérieur (6) pour enroulement du ruban souple (8).

14. Contacteur selon la revendication 6, caractérisé en ce que le rotor extérieur (6) est monté à rotation sur le rotor intérieur (5) à l'aide d'un manchon (66) de centrage monté sur une jupe annulaire (52), que présente le rotor intérieur (5) pour enroulement du ruban souple (8).

## Patentansprüche

1. Drehschalter, insbesondere für Kraftfahrzeuge, umfassend zwei koaxiale Teile, die im Verhältnis zueinander drehbar entgegen einem biegsamen elektrischen Verbindungsband (8) gelagert sind, das zwischen den besagten Teilen (2, 7) spiralförmig aufgewickelt und an einem seiner Enden an einen der besagten Teile und am anderen seiner Enden an den anderen der besagten Teile angefügt ist, wobei einer der besagten Teile (2, 7) eine drehbewegliche Nabe (2) und der andere Teil ein hohlförmiges ortsfestes Gehäuse (7) umfaßt, in dessen Innern die Nabe (2) aufgenommen ist, und wobei das ortsfeste Gehäuse (7) eine axial ausgerichtete ringförmige Einfassung umfaßt, in deren Innern eine Innenzahnung (40) eingearbeitet ist, die zu einem Planetengetriebezug (40, 4, 20) gehört, der außerdem eine am äußeren Umfang der Nabe (2) vorstehend angeordnete Zahnung und wenigstens ein Ritzel (4) enthält, das mit der Innenzahnung (40) des ortsfesten Gehäuses (7) und mit der Zahnung (20) der Nabe (2) in Eingriff kommen kann, wobei der besagte Planetengetriebezug eine Untersetzung der Umdrehungszahl zwischen der beweglichen Nabe (2) und dem ortsfesten Gehäuse (7) ermöglicht, **dadurch gekennzeichnet**, daß das Ritzel (4) drehbar an einem hohlen ringförmigen inneren Rotor (50) mit einer axial ausgerichteten ringförmigen Einfassung (52) gelagert ist, daß der innere Rotor (5) drehbar an der beweglichen Nabe (2) gelagert und im Innern des ortsfesten Gehäuses (7) aufgenommen ist, daß ein Zwischenraum zwischen der beweglichen Nabe (2) und der Innenbohrung der Einfassung (52) des inneren Rotors (5) zur Aufnahme des Bands und dessen Aufwicklung um die bewegliche Nabe (2) besteht und daß die Einfassung (52) des inneren Rotors (5) Durchgangsmittel (51) für das biegsame Band (8) aufweist, das sich auf der Einfassung (52) des inneren Rotors (5) aufwickeln kann.

2. Schalter nach Anspruch 1, **dadurch gekennzeichnet**, daß der innere Rotor (5) einen Stift (53) für die drehbare Lagerung des Ritzels (4) trägt und daß die Zahnung (40) des Gehäuses (7) durchgehend ist, während die Zahnung (20) der Nabe (2) partiell ist.

3. Schalter nach Anspruch 1, **dadurch gekennzeichnet**, daß die Durchgangsmittel (51) aus einem Schlitz (51) bestehen, der in die Einfassung (52) des inneren Rotors (5) eingearbeitet ist, und daß eine der Flächen des Schlitzes eine Abrundung (50) für die Rückführung des besagten Bands (8) aufweist.

4. Schalter nach Anspruch 1, **dadurch gekennzeichnet**, daß der innere Rotor (5) an einem seiner Enden einen Querboden (55) und eine Muffe (56) für die Zentrierung und die drehbare Lagerung des inneren Rotors (5) an der Nabe (2) aufweist.

5. Schalter nach Anspruch 1, **dadurch gekennzeichnet**, daß er im Innern des ortsfesten Gehäuses (7) einen hohlen kreisförmigen äußeren Rotor (6), der den inneren Rotor (5) umgibt, und Drehverbindungsmittel (3, 61, 62) umfaßt, die ausrückbar zwischen dem inneren Rotor (5) und dem äußeren Rotor (6) zum Einsatz kommen, so daß der besagte Planetengetriebezug mit Doppeldifferential ausgeführt ist.

6. Schalter nach Anspruch 5, **dadurch gekennzeichnet**, daß der innere Rotor (5) einen Mitnahmefinger (3) trägt, der mit Stiften (61 und 62) zusammenwirken kann, die am äußeren Rotor (6) angebracht sind.

7. Schalter nach Anspruch 6, **dadurch gekennzeichnet**, daß die Stifte (61, 62) des äußeren Rotors (6) eine unterschiedliche Höhe haben.

8. Schalter nach Anspruch 6, **dadurch gekennzeichnet**, daß der Mitnahmefinger (3) mit Rampenmitteln (30) zusammenwirken kann, die innen am Gehäuse (7) angebracht sind.

9. Schalter nach Anspruch 6, **dadurch gekennzeichnet**, daß der Mitnahmefinger (3) kippbar am inneren Rotor (5) mittels eines Bügels (31) gelagert ist, den der besagte innere Rotor (5) aufweist.

10. Schalter nach Anspruch 9, **dadurch gekennzeichnet**, daß der Mitnahmefinger (3) an einem seiner Enden zwei seitliche Lagerzapfen (32) für die Lagerung in fest mit dem Bügel (31) verbundenen Aufnahmemulden aufweist.

11. Schalter nach Anspruch 9, **dadurch gekennzeichnet**, daß der Mitnahmefinger (3) der Wirkung einer Rückstellfeder (36) ausgesetzt ist, die auf einem Steg des Bügels (31) und auf dem oberen Teil des Mitnahmefingers (3) zur Auflage kommt.

12. Schalter nach Anspruch 11, **dadurch gekennzeichnet**, daß der Mitnahmefinger (3) am anderen seiner Enden eine Keilform aufweist, um mit einer Rampe mit zugespitzter Form zusammenzuwirken, die innen am Gehäuse (7) angebracht ist.

13. Schalter nach Anspruch 5, **dadurch gekennzeichnet**, daß der äußere Rotor (6) eine ringförmige Einfassung (65) mit einem Schlitz für den Durchgang des biegsamen Bands (8) aufweist, wobei der besagte Schlitz (60) in eine ringförmige Einfassung (52) eingearbeitet ist, die der äußere Rotor (6) zur Aufwicklung des biegsamen Bands (8) aufweist.

14. Schalter nach Anspruch 6, **dadurch gekennzeichnet**, daß der äußere Rotor (6) drehbar am inneren Rotor (5) mittels einer Zentriermuffe (66) gelagert ist, die an einer ringförmigen Einfassung (52) angebracht ist, die der innere Rotor (5) zur Aufwicklung des biegsamen Bands (8) trägt.

## Claims

1. Rotary contactor, notably for motor vehicles, of the type having two coaxial parts mounted so as to be able to move in rotation with respect to each other, counter to a flexible electrical connection ribbon (8) wound in a spiral between the said parts (2, 7) whilst being coupled at one of its ends to one of the said parts and at its other end to the other one of the said parts, wherein one of the said parts (2, 7) has a hub (2) able to move in rotation and the other part a fixed hollow-shaped casing (7) inside which the hub (2) is housed, and in which the fixed casing (7) has an axially oriented annular skirt inside which an internal set of teeth (40) is provided, belonging to a train of epicyclic gears (40, 4, 20) also including a set of teeth provided projecting on the external periphery of the hub (2) and at least one pinion (4) able to mesh with the internal set of teeth (40) in the fixed casing (7) and with the set of teeth (20) on the hub (2), the said train demultiplying the number of turns between the movable hub (2) and the fixed casing (7), characterised in that the pinion (4) is rotatably carried by an internal rotor (50) with a hollow annular shape, provided with an axially oriented annular skirt (52), in that the internal rotor (5) is mounted for rotation on the movable hub (2) whilst being housed inside the fixed casing (7), in that a space exists between the movable hub (2) and the internal bore of the skirt (52) on the internal rotor (5) for housing the ribbon and winding the latter about the movable hub (2), and in that the skirt (52) on the internal rotor (5) has passage means (51) for the flexible ribbon (8) able to wind on the skirt (52) on the internal rotor (5).

2. Contactor according to Claim 1, characterised in that the internal rotor (5) carries a stud (53) for rotatably mounting the pinion (4) and in that the set of teeth (40) on the casing (7) is continuous, whilst the set of teeth (20) on the hub (2) is partial.

3. Contactor according to Claim 1, characterised in that the passage means (51) consist of a slot (51) provided in the skirt (52) on the internal rotor (5) and in that one of the flats of the slot has a rounded part (50) for diverting the said ribbon (8).

4. Contactor according to Claim 1, characterised in that the internal rotor (5) has, at one of its ends, a transverse bottom (55) and a sleeve (56) for the centring and rotary mounting of the internal rotor (5) on the hub (2).

5. Contactor according to Claim 1, characterised in that it has, inside the fixed casing (2), an external rotor (6), with a hollow annular shape, surrounding the internal rotor (5), and means of connecting in rotation (3, 61, 62) acting in a disengagable fashion between the internal rotor (5) and the external rotor (6), so that the said epicyclic train has a double differential.

6. Contactor according to Claim 5, characterised in that the internal rotor (5) carries a drive finger (3) able to cooperate with studs (61 and 62) carried by the external rotor (6).

7. Contactor according to Claim 6, characterised in that the studs (61, 62) on the external rotor (6) have different heights.

8. Contactor according to Claim 6, characterised in that the drive finger (3) is able to cooperate with ramp means (30) carried internally by the casing (7).

9. Contactor according to Claim 6, characterised in that the drive finger (3) is mounted so as to be able to tilt on the internal rotor (5) by means of a catch (31) on the said internal rotor (5).

10. Contactor according to Claim 9, characterised in that the drive finger (3) has, at one of its ends, two lateral journals (32) for mounting in cradles fixed to the catch (31).

11. Contactor according to Claim 9, characterised in that the drive finger (3) is subjected to the action of a return spring (36) bearing on a bridge on the catch (31) and on the top part of the drive finger (33).

12. Contactor according to Claim 11, characterised in that the drive finger (3) has, at the other one of its ends, a wedge shape for cooperating with a ramp with a pointed shape (30) carried internally by the casing (7).

13. Contactor according to Claim 5, characterised in that the external rotor (6) has an annular-shaped skirt (65) split for the flexible ribbon (8) to pass, the said slot (60) being formed in an annular skirt (52), which the external rotor (6) has for winding the flexible ribbon (8).

14. Contactor according to Claim 6, characterised in that the external rotor (6) is mounted for rotation on the internal rotor (5) by means of a centring sleeve (66) mounted on an annular skirt (52), which the internal rotor (5) has for winding the flexible ribbon (8).
